# FASCICULE DE BREVET EUROPEEN

(11) **EP 2 217 541 B1**
(45) Date de publication et mention de la délivrance du brevet: **03.07.2019**
(21) Numéro de dépôt: 08857545.1
(22) Date de dépôt: 21.11.2008
(51) Int. Cl.: C03C 17/28, C03C 17/32, C03C 17/34, C03C 17/42, G02B 1/04, G02B 1/10

(54) **PROCEDE D'OBTENTION D'UN ARTICLE D'OPTIQUE COMPORTANT UNE COUCHE TEMPORAIRE DE POLYURETHANE THERMOPLASTIQUE ALIPHATIQUE ET APPLICATION AU DEBORDAGE**
VERFAHREN ZUR HERSTELLUNG EINEM OPTISCHEN ARTIKEL MIT EINER TEMPORÄREN SCHICHT AUS ALIPHATISCHEM THERMOPLASTISCHEM POLYURETHAN UND SEINE VERWENDUNG FÜR ÄTZVORGÄNGE
PROCESS OF MANUFACTURE OF AN OPTICAL ARTICLE COMPRISING A TEMPORARY LAYER OF ALIPHATIC THERMOPLASTIC POLYURETHANE AND USE IN EDGING

(30) Priorité: 23.11.2007 FR 0759270; 18.02.2008 FR 0851022
(43) Date de publication de la demande: 18.08.2010
(73) Titulaire: Essilor International, 94220 Charenton-le-Pont (FR)
(72) Inventeur: HABASSI, Chefik, F-94220 Charenton Le Pont (FR); KOSCHER, Matthieu, F-94220 Charenton Le Pont (FR)
(74) Mandataire: Jacobacci Coralis Harle
(86) Numéro de dépôt international: PCT/FR2008/052105
(87) Numéro de publication internationale: WO 2009/071818

(56) Documents cités:
- WO-A-03/057641
- WO-A-2009/047422
- WO-A-2009/047426
- FR-A- 2 901 552
- US-A1- 2007 141 358
- US-B1- 6 170 952
- US-B1- 6 250 512

## Description

L'invention se rapporte d'une manière générale au domaine des articles d'optique, en particulier des lentilles ophtalmiques, pourvus d'un revêtement externe à propriété hydrophobe et/ou oléophobe (top coat).

Ces revêtements externes hydrophobes et/ou oléophobes sont bien connus dans la technique.

Ces revêtements externes hydrophobes et/ou oléophobes, qui sont généralement associés à des revêtements anti-reflet, ont pour objet de rendre la lentille ophtalmique moins salissante. Il s'agit le plus souvent de matériau de type fluorosilane qui diminue l'énergie de surface afin d'éviter l'adhérence de souillures grasses qu'il est ainsi plus facile d'éliminer.

Un des problèmes engendrés par ces revêtements externes hydrophobes et/ou oléophobes est qu'ils atteignent une efficacité telle que l'adhérence à l'interface d'un patin adhésif/surface du revêtement hydrophobe et/ou oléophobe nécessaire au montage des lentilles lors d'une opération de débordage s'en trouve altérée, voire compromise.

Le débordage est la dernière étape de finition d'une lentille ophtalmique et est l'opération qui consiste à usiner la tranche ou périphérie de la lentille de façon à la conformer aux dimensions et à la forme requise pour adapter la lentille à la monture de lunette dans laquelle elle est destinée à prendre place.

Le débordage est réalisé sur une meuleuse automatisée comprenant des meules diamantées qui effectuent l'usinage défini ci-dessus et il faut donc maintenir fixement la lentille à déborder dans la meuleuse.

Pour ce faire, la première phase consiste à fixer un gland au centre de la surface convexe de la lentille au moyen d'un patin adhésif sensible à la pression tel qu'un patin adhésif double face (par exemple une pastille autocollante).

Le gland auquel adhère la lentille par l'intermédiaire du patin adhésif est alors mécaniquement fixé dans l'axe de montage de la meuleuse et un bras axial vient bloquer la lentille en appliquant une force centrale sur la face de la lentille opposée au gland.

Lors du débordage, la lentille ne doit pas subir un désaxage supérieur à 2°, de préférence d'au plus 1°, et par conséquent l'adhésion du patin sur la surface de la lentille est essentielle à l'obtention d'un débordage satisfaisant.

Pour remédier à ces difficultés de débordage des lentilles pourvues d'un revêtement externe hydrophobe et/ou oléophobe, on a proposé de former sur ces revêtements hydrophobes et/ou oléophobes un revêtement temporaire, de nature organique ou minéral. Par exemple, les demandes de brevet européen EP 1 392 613 et EP 1 633 684, au nom de ESSILOR, décrivent l'emploi d'un revêtement temporaire, de nature organique ou minérale, qui accroît l'énergie de surface et permet donc à l'opticien de procéder à un débordage fiable de la lentille. Après débordage, le revêtement temporaire doit être enlevé afin de restituer au revêtement externe hydrophobe et/ou oléophobe ses propriétés de surface. Il va de soi, qu'après retrait du revêtement temporaire, le revêtement externe hydrophobe et/ou oléophobe doit présenter des propriétés de surface aussi proche que possible de ses propriétés initiales.

La demande US 2007/141358 décrit un procédé de débordage d'un article d'optique, dans lequel la surface externe de l'article est revêtue d'une couche protectrice temporaire de nature organique à base de matériaux fluorés capables d'établir une liaison intermoléculaire ou d'interagir avec le matériau adhésif recouvrant la surface du patin de maintien. La surface externe de l'article est de préférence un revêtement antisalissure, avec lequel la couche protectrice temporaire est capable d'interagir. Cette demande ne décrit pas une couche temporaire à base de polyuréthane.

Le cas échéant, après l'opération de débordage principale de l'article d'optique, on peut souhaiter effectuer une opération de reprise de débordage, et/ou un perçage du verre, la zone percée servant de point de fixation à une branche de monture de lunettes.

Pour ces dernières étapes, en particulier le perçage du verre, il est fondamental que l'ensemble gland/patin adhésif de maintien reste en position sur la surface de l'article, car il constitue un repère permettant de positionner les forets pour le perçage des trous.

Le film décrit dans la demande de brevet WO 05/015 270 permet d'assurer le débordage principal, mais l'on constate systématiquement que l'ensemble gland/patin adhésif de maintien se détache spontanément dans les secondes qui suivent cette opération de débordage principal.

Dès le début de l'opération de débordage, il semble que l'eau projetée sur l'article lors de cette opération de débordage, s'infiltre sous le film temporaire qui s'enroule autour de lui-même. Dans ces conditions, il est alors impossible de procéder ultérieurement à une reprise de débordage ou à un perçage du verre.

La demande de brevet WO 03/05 7641 décrit une lentille comportant un revêtement de surface hydrophobe et/ou oléophobe revêtu d'un revêtement temporaire mono ou multicouche. Outre le fait qu'elle peut protéger une face de la lentille lorsque l'autre face subit un traitement par des espèces énergétiques, cette couche peut être utilisée pour faciliter le débordage de la lentille. La demande décrit notamment un revêtement temporaire bicouche se composant d'une couche inorganique (MgF₂) au contact du revêtement hydrophobe et/ou oléophobe de la lentille, et d'une couche externe organique à base de latex (méth)acrylique ou polyuréthane. Par conséquent, le film temporaire d'un matériau organique n'est pas directement déposé sur le revêtement externe hydrophobe et/ou oléophobe.

La présente invention a donc pour objet de fournir un article d'optique, notamment une lentille ophtalmique, comportant un revêtement externe hydrophobe et/ou oléophobe directement revêtu par une couche temporaire qui :
- après retrait de la couche temporaire, permet de récupérer un revêtement externe hydrophobe et/ou oléophobe ayant des propriétés pratiquement identiques à ses propriétés initiales et en particulier un angle de contact statique avec l'eau pratiquement égal à l'angle de contact statique avec l'eau initial ;
- permet le cas échéant, une opération de reprise de débordage ; et/ou
- permet d'effectuer un perçage du verre, la zone percée servant de point de fixation à une branche de monture de lunettes.

Les buts ici sont atteints selon l'invention par un procédé d'obtention d'un article d'optique comportant sur une de ses surfaces principales un revêtement externe hydrophobe et/ou oléophobe de faible énergie de surface, caractérisé en ce qu'il comprend le dépôt d'une couche d'une composition d'un ou plusieurs polyuréthanes thermoplastiques aliphatiques à squelette polyéther ou polyester en solution dans un solvant organique ou mélange de solvants organiques directement sur le revêtement externe hydrophobe et/ou oléophobe de l'article d'optique et le séchage de la composition, pour obtenir une couche temporaire d'une composition séchée comprenant, de préférence consistant en un ou plusieurs polyuréthanes thermoplastiques aliphatiques à squelette polyéther ou polyester (TPU aliphatique).

On entend par polyuréthane thermoplastique aliphatique à squelette polyéther ou polyester un polyuréthane thermoplastique aliphatique dont la chaine principale comporte des segments polyéthers et/ou polyesters.

Préférentiellement, la composition séchée comprend au moins 50 % en masse de TPU, mieux 70% en masse, et de façon optimale plus de 90 % en masse de TPU.

Préférentiellement, la composition séchée consiste en un polyuréthane thermoplastique aliphatique à squelette polyéther ou polyester (TPU aliphatique).

La couche temporaire, de préférence pelable, a en général une épaisseur de 1 à 80 microns, préférentiellement 10 à 60 microns, mieux 20 à 50 microns, et de façon optimale 30 à 40 microns. Il est remarquable que la couche temporaire de l'invention à base de TPU permette le débordage, que l'épaisseur physique de la couche de top coat soit de 3 à 6 nm ou du double.

Selon le procédé de dépôt de la couche temporaire, l'épaisseur de la couche peut varier localement. En particulier, dans le cas d'un dépôt par « dip » (au trempé) dans un bain de composition liquide de revêtement, l'épaisseur est plus élevée dans la partie basse du verre (partie contactant le liquide de la composition de revêtement temporaire en premier et quittant le bain en dernier lors de la remontée du verre).

L'épaisseur moyenne de la couche temporaire est la moyenne de 3 épaisseurs mesurées en 3 points de la surface : deux points opposés : point haut (à environ 5 mm de la périphérie du verre), centre et point bas (à environ 5 mm de la périphérie du verre), dans le cas d'un dépôt par « dip ».

Les gammes d'épaisseurs moyennes sont les mêmes que les gammes d'épaisseur mentionnées précédemment.

De préférence, la couche temporaire a une énergie de surface supérieure ou égale à 15 mJ/m², mieux égale ou supérieure à 20 mJ/m², mieux encore égale ou supérieure à 30 mJ/m². De préférence encore, la couche temporaire a une composante polaire de l'énergie de surface inférieure à 26 mJ/m².

Dans la présente demande, le terme "article d'optique" désigne un substrat en verre organique ou minéral, optiquement transparent, traité ou non, selon qu'il comporte un ou plusieurs revêtements de nature diverse ou qu'il reste nu.

De préférence, dans le cas de lentilles ophtalmiques le revêtement hydrophobe et/ou oléophobe ainsi que la couche temporaire sont déposés en face avant (généralement la face convexe) de la lentille, c'est-à-dire la face de la lentille la plus éloignée de l'oeil du porteur.

Les énergies de surface sont calculés selon la méthode OWENS-WENDT décrite dans la référence suivante : "Estimation of a surface force energy of polymers" OWENS D.K., WENDT R.G. (1969) J. Appl. POLYM. SCI, 13, 1741-1747.

Les articles d'optique préparés selon l'invention sont des articles d'optique, notamment des lentilles ophtalmiques, qui comportent un revêtement externe hydrophobe et/ou oléophobe et préférentiellement des articles d'optique comportant à la fois un revêtement externe hydrophobe et/ou oléophobe déposé sur un revêtement anti-reflet mono ou multi-couche.

En effet, les revêtements externes hydrophobes et/ou oléophobes sont généralement appliqués sur des articles d'optique comportant un revêtement anti-reflet, en particulier en matière minérale, afin de réduire leur tendance marquée à la salissure, par exemple vis-à-vis des dépôts graisseux.

Comme cela est connu, les revêtements externes hydrophobes et/ou oléophobes sont obtenus par application, sur la surface du revêtement anti-reflet de composés diminuant l'énergie de surface de l'article d'optique.

De tels composés ont été largement décrits dans l'art antérieur, par exemple dans les brevets US-4,410,563, EP 0 203 730, EP 749 021, EP 844 265, et EP 933 377.

Des compositions contenant des fluorosilanes préférées pour la préparation de revêtements hydrophobes et/ou oléophobes sont décrites dans brevet US 6,183,872. Elles contiennent des fluoropolymères à groupements organiques porteurs de groupes à base de silicium représentés par la formule générale suivante et ayant une masse moléculaire de 5.10² à 1.10⁵ : 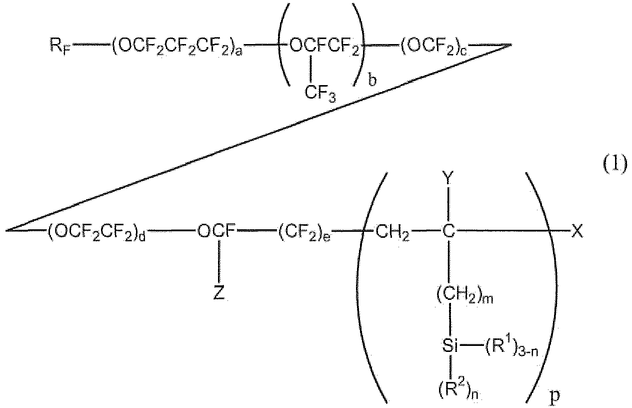 dans laquelle R_{F} représente un groupement perfluoroalkyle ; Z représente un groupe fluoro ou trifluorométhyle ; a, b, c, d et e représentent chacun, indépendamment l'un de l'autre, 0 ou un entier supérieur ou égal à 1, à la condition que la somme a+b+c+d+e ne soit pas inférieure à 1 et que l'ordre des unités répétitives figurant entre les parenthèses indexées sous a, b, c, d et e ne soit pas limité à celui représenté ; Y représente H ou un groupe alkyle comprenant de 1 à 4 atomes de carbone ; X représente un atome d'hydrogène, de brome ou d'iode ; R¹ représente un groupe hydroxyle ou un groupe hydrolysable ; R² représente un atome d'hydrogène ou un groupement hydrocarboné monovalent; m représente 0,1 ou 2; n représente 1, 2 ou 3 ; et p représente un entier au moins égal à 1, préférentiellement au moins égal à 2.

Une composition contenant un fluorosilane répondant à la formule (1) précédente est commercialisée par DAIKIN INDUSTRIES sous la dénomination OPTOOL DSX®.

Ce composé est préféré dans le cadre de la mise en oeuvre de l'invention.

D'autres fluorosilanes convenant pour la formation de revêtements anti-salissures sont décrits dans les brevets JP 2005-187936 et EP 1 300 433, et répondent à la formule : 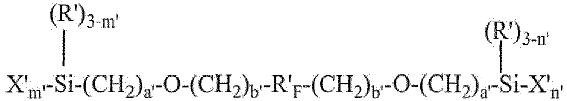 dans laquelle R'_{F} est un radical divalent perfluoropolyéther à chaîne linéaire, R' est un radical alkyle en C₁-C₄ ou un radical phényle, X' est un groupe hydrolysable, a' est un entier de 0 à 2, b' est un entier de 1 à 5, et m' et n' sont des entiers égaux à 2 ou 3.

Des compositions commerciales permettant de préparer des revêtements hydrophobes et/ou oléophobes sont les compositions KY130® (répondant à la formule du brevet JP 2005-187936).

Les composés à base de silane porteur de groupements fluorés, en particulier de groupements perfluorocarbone ou perfluoropolyéther, sont le plus souvent utilisés.

A titre d'exemple, on peut citer des composés de silazane, de polysilazane ou de silicone comprenant un ou plusieurs groupements fluorés tels que cités précédemment.

Un procédé connu consiste à déposer sur le revêtement anti-reflet des composés porteurs de groupements fluorés et des groupements Si-R, R représentant un groupe -OH ou un précurseur de celui-ci, préférentiellement un groupe alcoxy. De tels composés peuvent effectuer à la surface du revêtement anti-reflet, directement ou après hydrolyse, des réactions de polymérisation et/ou réticulation.

L'application des composés diminuant l'énergie de surface de l'article d'optique est classiquement effectuée par trempé dans une solution du composé, par centrifugation ou dépôt en phase vapeur, notamment.

Généralement, le revêtement externe hydrophobe et/ou oléophobe a une épaisseur inférieure à 10 nm, et mieux encore inférieure à 5 nm.

En général, le revêtement externe hydrophobe et/ou oléophobe de faible énergie de surface, a une énergie de surface égale ou inférieure à 14 mJ/m², de préférence égale ou inférieure à 13 mJ/m², mieux égale ou inférieure à 12 mJ/m².

L'article d'optique préparé selon l'invention, qui est de préférence une lentille ophtalmique, peut comporter sur une de ses surfaces principales d'autres revêtements de surface entre le substrat et le revêtement hydrophobe et/ou oléophobe, notamment un revêtement de primaire antichoc, un revêtement anti-abrasion et/ou anti-rayure et/ou un revêtement antireflet. Dans un mode de réalisation préféré, l'article d'optique comporte, outre le revêtement hydrophobe et/ou oléophobe, un revêtement de primaire antichoc, mieux, un revêtement de primaire antichoc, un revêtement antireflet et le revêtement hydrophobe et/ou oléophobe, déposés dans cet ordre sur une de ses surfaces principales.

Comme indiqué précédemment, la couche temporaire de l'invention est une couche séchée d'une composition d'un ou plusieurs polyuréthanes thermoplastiques aliphatiques à squelette polyéther ou polyester dans un solvant organique ou mélange de solvants organiques

Généralement, le ou les TPU aliphatiques présents dans la composition représentent 5 à 20%, de préférence 5 à 15% en poids par rapport au poids total de la composition déposée directement sur le revêtement externe hydrophobe et/ou oléophobe.

Les polyuréthanes thermoplastiques aliphatiques de l'invention sont les produits de réaction d'un diisocyanate aliphatique et d'un polyol aliphatique.

Parmi les diisiocyanates aliphatiques on peut citer l'hexaméthylène -1,6-diisocyanate, l'isophorone diisocyanate, l'éthylène diisocyanate, le dodécane-1,12-diisocyanate, le cyclohexane-1,3-diisocyanate, le bis-(4-isocyanato-cyclohexyl)-méthane et leurs mélanges.

La polyisocyanate préféré est :

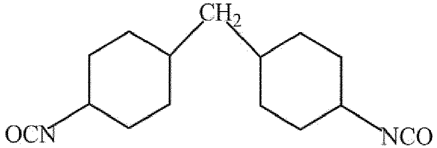

Les polyols aliphatiques convenant pour la présente invention sont les polyols à squelette polyéther ou polyester ayant au moins deux groupes hydroxyles, éventuellement en mélange avec d'autres polyols, en particulier comportant plus de deux groupes hydroxyles.

Les polyols préférés sont les polyalkylène glycols, en particulier les polyethylène glycols, les polypropylène glycols, les polybutylène glycols et leurs mélanges.

Les polyéthylène glycols préférés répondent à la formule HO[CH₂CH₂O]_{n'}H où n' est un entier de 15 à 30, de préférence de 19 à 25 et sont encore de préférence des mélanges de ces polyéthylène glycols.

Les polybutylène glycols préférés répondent à la formule HO[(CH₂)_{4O}]ₙH où n est un entier de 2 à 35, de préférence 3 à 30, mieux de 4 à 29, et sont encore de préférence des mélanges de ces polybutylèneglycols.

De préférence on utilise des mélanges de polyéthylène glycols et polybutylène glycols préférés, en particulier tels que définis ci-dessus, le(ou les) polybutylène glycol(s) étant majoritaire(s) dans le mélange.

Dans une réalisation tout à fait préférentielle des TPU selon l'invention, le « polyol » est un mélange :
- de polybutylène glycol, de formule HO[(CH₂)₄O]ₙH, où n est un entier de 2 à 35, préférentiellement de 3 à 30, mieux de 4 à 29, le « polybutylène glycol » étant le composant majoritaire du mélange de polyols (c'est-à-dire supérieur à 50% en poids de l'ensemble des polyols), et
- de polyéthylène glycol HO[CH₂CH₂O]_{n'}H où n' est un entier de 15 à 30, préférentiellement de 19 à 25, et le polyisocyanate est de préférence :

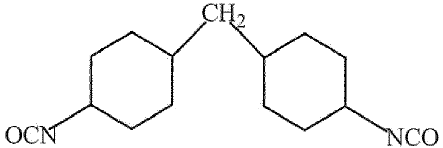

Le polyuréthane préféré est obtenu par réaction du mélange des polyols préférés et du polyisocyanate préféré ci-dessus.

On peut ajouter au TPU un agent anti-plastifiant dans les proportions usuelles.

Les polyols à squelette polyéther ou polyester ayant au moins deux groupes hydroxyles représentent préférentiellement au moins 50%, mieux au moins 70% , mieux encore au moins 90% en mole par rapport à l'ensemble des polyols présents dans la composition, et de façon optimale 100%.

En général, les polyols à squelette polyéther ou polyester ont une masse molaire d'environ 1000. On peut utiliser également des polyols à squelette polyéther ou polyester ayant une masse molaire inférieure ou supérieure à 1000, notamment allant jusqu'à 2000.

Pour les polyols à squelette polyéther on peut citer les polytétraméthylèneglycols, notamment de masse molaire d'environ 1000, ou les mélanges d'un diol à squelette polyéther et d'un polyol ayant plus de deux groupes hydroxyles, tel qu'un mélange d'un glycol et d'un triol, par exemple du glycérol ou du triméthylolpropane.

Pour les polyols à squelette polyester on peut citer ceux incorporant un acide dibasique tel que l'acide adipique ou glycolique, l'ester étant obtenu par estérification avec de l'éthylène glycol, du propylène glycol ou éventuellement du polyéthylène glycol, du polypropylène glycol, du polybutylène glycol ou leurs mélanges, de préférence la masse molaire du polyol à squelette polyester final n'excédant pas substantiellement environ 1000.

Comme cela est classique, on peut utiliser des extendeurs de chaîne, avantageusement des diols à chaîne courte, tels que l'éthanediol, le propanediol, le butanediol et analogue, pour autant que la nature aliphatique du polyuréthane thermoplastique résultant soit conservée.

De préférence, les polyuréthanes thermoplastiques aliphatiques selon l'invention sont des polyuréthanes aliphatiques à squelette polyéther, et en particulier des élastomères.

De tels polyuréthanes thermoplastiques aliphatiques sont disponibles dans le commerce auprès de la société MORTON INTERNATIONAL INC. sous la dénomination MORTHANE® ou de la société BAYER CORPORATION, Polymers Division sous la dénomination TEXIN®.

Parmi les polyuréthanes aliphatiques à squelette polyéther du commerce on peut citer les produits commerciaux de la gamme MORTHANE® PE 199-100, PE 193-100, PE 192-100.

Parmi les élastomères de polyuréthane aliphatique à squelette polyéther du commerce on peut citer les produits TEXIN® DP7-3006, DP7-3004, DP7-3005, DP7-3007 et DP7-3008.

Parmi les polyuréthanes aliphatiques à squelette polyester du commerce on peut citer le produit MORTHANE® PN3429-100.

De tels polyuréthanes thermoplastiques aliphatiques sont également décrits dans le brevet US 6,170,952.

Comme indiqué, dans la composition de revêtement, le polyuréthane thermoplastique aliphatique ou le mélange de polyuréthanes thermoplastiques aliphatiques est en solution dans un solvant ou mélange de solvants organiques. On peut utiliser tout solvant ou mélange de solvants organiques capable de dissoudre le polyuréthane ou mélange de polyuréthanes. Parmi les solvants organiques appropriés on peut citer la N-méthyl-pyrrolidone, le diméthylacétamide, le chloroforme, le diméthylformamide des mélanges de ces solvants ou encore des mélanges de ces solvants avec un alcanol tel que l'éthanol. La composition de revêtement peut contenir une faible proportion d'eau typiquement moins de 10% en poids, de préférence moins de 5% en poids et mieux encore moins de 1% en poids.

Dans une réalisation préférentielle de l'invention, la composition de revêtement ne contient pas d'eau.

Les couches temporaires de l'invention peuvent être déposées sur le revêtement hydrophobe et/ou oléophobe par tout type de moyen, mais préférentiellement par trempage (dip coating), centrifugation, pulvérisation, ou appliquée au moyen d'un pinceau (brush coating), de préférence par trempage.

Le dépôt peut être effectué sur la totalité de la surface de la face de la lentille destinée à recevoir le patin adhésif de maintien ou sur une partie de celle-ci, en particulier dans la partie centrale de la lentille.

Dans un mode de réalisation, on peut appliquer la couche temporaire sur la partie centrale au moyen d'un pinceau.

Aucun autre revêtement n'est disposé sur la surface de la couche temporaire, autrement dit la couche temporaire est monocouche et lors d'un débordage, le patin adhésif de maintien vient directement en contact de la surface de la couche temporaire à base de latex de polyuréthane.

De préférence, la couche temporaire est optiquement inactive, c'est-à-dire qu'elle permet la mesure de puissance avec des moyens de mesure classiques tels que le frontofocomètre.

Après application, la composition de polyuréthane thermoplastique aliphatique selon l'invention est séchée, par un chauffage à des températures variant typiquement de 40°C à 80°C, généralement de l'ordre de 50°C pendant une ou plusieurs heures, généralement environ 2 heures.

Les résultats avantageux de l'invention sont obtenus par simple séchage et ne nécessitent pas de rayonnement actinique.

Il est également décrit un procédé de débordage d'une lentille ophtalmique, comportant un revêtement hydrophobe et/ou oléophobe, de préférence déposé sur un revêtement anti-reflet mono ou multi-couche, sur lequel est directement déposé un revêtement temporaire de polyuréthane thermoplastique aliphatique tel que défini précédemment.

Le procédé de débordage peut être éventuellement suivi d'une étape de reprise de débordage et/ou d'une étape de perçage.

Plus précisément, le procédé de débordage comprend :
- l'obtention d'une lentille ophtalmique comportant un revêtement hydrophobe et/ou oléophobe sur lequel est directement déposé un revêtement temporaire de polyuréthane thermoplastique aliphatique ;
- la fixation de la lentille à un dispositif de maintien au moyen d'un patin adhésif adhérant à la surface du revêtement temporaire ;
- le montage du dispositif de maintien auquel adhère la lentille par l'intermédiaire du patin adhésif dans un dispositif de débordage ;
- le débordage de la lentille par usinage de la périphérie de la lentille pour conformer la lentille aux dimensions et à la forme d'une monture ; et
- après récupération de la lentille, l'enlèvement du revêtement temporaire, notamment par pelage.
- Les articles d'optique préparés selon l'invention présentent les avantages d'être stables dans le temps, et peu sensibles à leur environnement. En particulier, ils ne sont pas ou peu affectés par des conditions d'humidité et de température élevés.

Les exemples suivants illustrent la présente invention. Dans les exemples, sauf indication contraire, les parties et pourcentages sont tous exprimés en poids.

Les lentilles sur lesquelles sont déposées les différentes couches sont des lentilles thermoplastiques en PC (polycarbonate), de diamètre 70 mm, de puissance -8,00 dioptries et de cylindre +2,00.

Elles comportent déposés dans cet ordre : un revêtement de primaire antichoc (W234®), un revêtement anti-abrasion et un revêtement anti-reflet de nature minérale ZrO₂/SiO₂/ZrO₂/SiO₂. On vient ensuite déposer la couche de top coat sur la dernière couche (couche externe) de SiO₂.

### 1. Dépôt de la couche hydrophobe/oléophobe (topcoat) - OPTOOL DSX® de la société DAIKIN

∘ Conditions de dépôt de top coat DSX sous vide (3 x10⁻⁵ mbar = 3 x 10⁻³ Pa) ;c'est le vide atteint par les machines de TSV standard:
∘ Epaisseur programmée = 14 nm (épaisseur déposée de 3 à 5 nm)
   ▪ Vitesse de dépôt (connu sous l'appellation Rate) = **0,4 nm/sec**
   ▪ Dépôt se fait par effet joule
   ▪ Le produit dans sa capsule est chauffé préalablement sur plaque chauffante à 70°C pendant 2 minutes avant utilisation
∘ Epaisseur programmée = 25 nm (épaisseur déposée de 6 à 10 nm)
   ▪ L'ensemble du procédé demeure identique à celui du 14 nm.

### 2 . Préparation d'une composition de polyuréthane thermoplastique aliphatique

### Mode de préparation :

- introduire 80,00 g de TPU TEXIN DP7-3006 dans un bêcher en polypropylène ou en verre ;
- ajouter 560,00g de chloroforme dans le bêcher ;
- ajouter 240 g d'éthanol dans le bêcher ;
- placer le bêcher sous l'agitateur RAYNERIE (VMI) munie d'une turbine défloculeuse - diamètre 35mm,
- mettre l'agitateur en service avec une faible vitesse d'agitation puis augmenter la vitesse progressivement jusqu'au 1880tr/mn (l'opération dure environ ½ heure).
- couvrir la solution à l'aide de papier d'aluminium et laisser agiter la solution.

Après une nuit sous agitation, on obtient une solution épaisse,
Filtrer cette solution au travers d'un filtre Sartorius type 5 pouces (8µm).

### 3. Dépôt de la couche temporaire

La couche temporaire est déposée par trempé sur la lentille revêtue du top coat:
La lentille est placée dans une pince la maintenant avec trois points de contact sur la tranche de la lentille.

Après trempage vertical, dans la solution de TPU, la lentille est remontée verticalement du bain à une vitesse de 2,27 mm/s.

Une fois le trempage terminé le verre est maintenu à 50°C pendant au moins 2 heures).

Deux types des lentilles avec couche temporaire sont obtenus : lentilles ayant un top coat de 3 à 5 nm et lentilles ayant un top coat de 6 à 10 nm. Chacune de ces lentilles est soumise aux évaluations de performance ci-après.

On vérifie que l'on peut mesurer la puissance des lentilles obtenues en utilisant un frontofocomètre tel qu'un CLE 60.

Si c'est possible, cela signifie que la couche temporaire n'affecte pas cette mesure.

Elle est notée OK dans le test de lecture optique, NO dans le cas contraire.

### 4. Détermination des caractéristiques d'énergie de surface des couches temporaires des TPU aliphatiques

Les caractéristiques d'énergie de surface, énergie totale, composante dispersive et composante polaire sont déterminés par la méthode d'OWENS - WENDT au moyen d'un appareil DIGIDROP GBX .

### 5. Protocole de mesure de desaxage de lentilles soumises a une opération de debordage

### a. Description du test

Le test de débordage est effectué sur une meuleuse Essilor Kappa.

Les lentilles sont débordées de façon à leur donner la forme d'un gabarit de monture spécifique (voir ci-dessous).

Les équipements suivants sont nécessaires pour réaliser le test :
Frontofocomètre Essilor CLE 60 (pour pointage des verres et contrôle final)
Chaîne numérique Essilor Kappa (Centreur/Bloqueur et Meuleuse)
Gabarit de monture de type Charmant référence 8320, modèle 05, taille 51 Pseudo monture de contrôle.

Pastille adhésive ou patin adhésif de maintien LEAP II de diamètre 24 mm GAM200 de la société 3M. Gland Essilor pour accueillir la pastille adhésive.

### b. L'échantillonnage et les paramètres de montage.

Les cotes de montage retenues sont les suivantes :
Hauteur : Demi-hauteur boxing soit PD (droite et gauche) = 32 mm et Axe = 90°

Le cycle de détourage utilisé est un cycle adapté au matériau (cycle plastique pour bas indice, cycle polycarbonate pour PC et cycle pour substrat Moyen indice de réfraction MHI). La pression de serrage retenue est la pression correspondant à l'option verre fragile de la meuleuse.

### c. Contrôles

Après débordage, on effectue un contrôle afin de déterminer si l'opération de débordage a été effectuée de façon satisfaisante.

Les contrôles sont effectués à l'aide du frontofocomètre CLE 60 en pointant les lentilles placées dans la pseudo-monture. Les axes sont repérés durant cette phase.

Si la lentille, après l'opération de débordage ne peut être insérée dans la pseudo-monture ou si la lentille peut être insérée dans la pseudo-monture, mais qu'elle présente un désaxage de plus de 2°, la lentille est non-conforme et n'a pas passé le test. Elle est référencée - dans le tableau de résultats.

Si la lentille présente un désaxage de moins de 2°, la lentille passe le test et elle est référencée OK dans le tableau de résultats.

### 6. Perçage après debordage

Après l'opération de débordage, l'ensemble lentille et gland/patin adhésif, avec le gland/patin adhésif adhérant fermement à la lentille est placé dans une machine de perçage Optodrill ou Minima2 et maintenu par un bloqueur.

La lentille est alors percée
- soit manuellement avec la perceuse Minima 2 munie d'un foret de 2.2 mm de diamètre, de vitesse de rotation 3500 tours/minute.
- soit automatiquement avec la perceuse Optidrill Evo munie d'un foret de 2,2 mm de diamètre de vitesse de rotation 12000 tours/minute.

Après perçage, on dévisse le système de fixation et on récupère la lentille percée et le gland/patin adhésif.

Puis le gland est ôté et la lentille percée récupérée.

Lorsque la lentille peut être positionnée dans le dispositif de perçage et passe de ce fait avec succès l'opération de perçage, elle est notée OK dans le tableau III. Dans le cas contraire, elle est notée NO.

### 7. Mesure de l'angle de contact avec l'eau

La mesure de l'angle de contact s'effectue au moyen d'un goniomètre KRUSS référence DSA 10 en déposant 5 gouttes d'eau désionisée (4µl par goutte) sur la surface nettoyée et sèche de la lentille, une au centre et les quatre autres à 20mm de celle-ci.

### 8. Traitement à la soude

Le traitement à la soude caustique qui a pour but de vérifier la résistance du revêtement hydrophobe et/ou oléophobe consiste à tremper la lentille 30 minutes dans une solution de soude 0,1N, puis à rincer 3 fois à l'eau déminéralisée et 3 fois à l'alcool isopropylique, sécher (par soufflage des 2 faces des verres à l'air comprimé. Vérifier à l'aide d'un minispot l'absence de trace de liquide), mesurer les angles de contact sur les mêmes faces qu'avant le traitement (t=o), La valeur de l'angle de contact est la moyenne des résultats.

Le verre est considéré comme ayant passé avec succès le traitement à la soude caustique lorsque les valeurs moyennes d'angle de contact sans traitement à la soude et l'angle de contact après traitement à la soude sont proches des valeurs visées définies ci-dessous pour 3-5 nm de top coat :

| Nature du revêtement hydrophobe et/ou oléophobe/couche temporaire retirée | Valeurs visées « Angle de contact » avec l'eau (°) | |
|---|---|---|
| | Sans traitement à la soude caustique | Après traitement à la soude caustique |
| OPTOOL DSX® 3nm | 117° - 120° | 113°-114° |
| OPTOOL DSX ®6 nm | 119° | 116° |

### 9. Tests de tenue dans le temps

Les lentilles ophtalmiques préparées selon l'invention, comportant la couche temporaire, sont placées dans des pochettes en papier (ou sachets ophtalmiques) Landouzy (59000 France) comportant un coussinet fibreux et sont stockées pendant 3 mois dans une enceinte climatique régulée en température (40°C° et en hygrométrie (80% d'humidité)).

A la fin de la période de 3 mois, les lentilles sont retirées de leur pochette et un examen visuel est effectué.

On repère visuellement (à l'oeil nu) si des fibres ont été arrachées de la pochette et adhèrent à la surface de la lentille, si l'apparence cosmétique du verre a été modifiée (apparition ou non de traces, de taches).

Si la lentille ophtalmique passe avec succès le test, on note OK dans le tableau II ci-dessus.

Sinon, on note NO.

**Résultats obtenus :**

| | Lecture optique | Débordage | Perçage après débordage | Tenue dans le temps |
|---|---|---|---|---|
| Lentilles à 14 et 25 nm (épaisseurs programmées) d'Optool DSX avec couche temporaire | OK | OK | OK | OK |

Toutes les lentilles obtenues passent les tests de lecture optique, débordage, perçage après débordage et tenue dans le temps.

En ce qui concerne le test de traitement à la soude :
On rappelle que la lentille de référence pour un top coat de 6 à 10 nm, sans couche temporaire donne les résultats suivants: l'angle de contact statique avec l'eau avant traitement à la soude est de 119°. Après traitement, il est de 116°.

On effectue un test sur une lentille comprenant un top coat de 6 à 10 nm et une couche temporaire déposés selon le procédé décrit précédemment, la couche temporaire ayant en outre été laissée en contact avec la couche de top coat pendant une semaine à température ambiante, dans des conditions d'humidité usuelles.

Après retrait de la couche temporaire par pelage manuel, on mesure l'angle de contact statique initial avec l'eau puis on effectue le traitement à la soude et on mesure à nouveau l'angle de contact statique avec l'eau. On trouve les résultats suivants :
Angle de contact initial : 119, 5°
Angle de contact après traitement soude (30 minutes) : 117°
On constate que les lentilles traitées par le procédé de l'invention ne sont pas altérées par la couche temporaire.

Le revêtement temporaire selon l'invention présente les avantages d'être applicable par voie liquide, de permettre d'effectuer un marquage des verres sur la couche temporaire, de préserver la faible énergie de surface du revêtement hydrophobe et/ou oléophobe, et de permettre une reprise de débordage et/ou un perçage à la suite du débordage initial.

## Revendications

1. Procédé d'obtention d'un article d'optique comportant sur une de ses surfaces principales un revêtement externe hydrophobe et/ou oléophobe, **caractérisé en ce qu'**il comprend le dépôt d'une couche d'une composition d'un ou plusieurs polyuréthanes thermoplastiques aliphatiques à squelette polyéther ou polyester en solution dans un solvant organique ou mélange de solvants organiques directement sur le revêtement externe hydrophobe et/ou oléophobe de l'article d'optique et le séchage de la composition, pour obtenir une couche temporaire séchée comprenant, de préférence consistant en un ou plusieurs polyuréthanes thermoplastiques aliphatiques à squelette polyéther ou polyester.

2. Procédé selon la revendication 1, **caractérisé en ce que** les polyuréthanes thermoplastiques aliphatiques sont les produits de réaction d'un ou plusieurs diisocyanates aliphatiques et d'un ou plusieurs polyols aliphatiques.

3. Procédé selon la revendication 2, **caractérisé en ce que** les polyols aliphatiques sont choisis parmi les polyols à squelette polyéther ou polyester.

4. Procédé selon la revendication 2, **caractérisé en ce que** les polyols aliphatiques sont choisis parmi les polyols à squelette polyéther de nature élastomère.

5. Procédé selon l'une quelconque des revendications 2 à 4, **caractérisé en ce que** le polyol est choisi parmi les polyéthylène glycols, les polypropylène glycols, les polybutylène glycols et leurs mélanges, de préférence les mélanges de polybutylène glycol(s) et de polyéthylène glycol(s), le (ou les) polybutylène glycol(s) étant majoritaire(s) dans le mélange.

6. Procédé selon la revendication 2 ou 3, **caractérisé en ce que** le polyol est choisi parmi les polyols à squelette polyester incorporant un acide dibasique, l'ester étant obtenu par estérification avec de l'éthylène glycol, du propylène glycol, du polyéthylène glycol, du polypropylène glycol, du polybutylène glycol ou leurs mélanges.

7. Procédé selon l'une quelconque des revendications 2 à 6, **caractérisé en ce que** le diisocyanate est choisi parmi l'hexaméthylène-1,6-diisocyanate, l'isophorone diisocyanate, l'éthylène diisocyanate, le dodécane-1,12-diisocyanate, le cyclohexane-1,3-diisocyanate, le bis-(4-isocyanato-cyclohexyl)-méthane et leurs mélanges.

8. Procédé selon l'une quelconque des revendications précédentes, **caractérisé en ce que** la composition comprend 5 à 20%, de préférence 5 à 15% de polyuréthane thermoplastique aliphatique par rapport au poids total de la composition.

9. Procédé selon l'une quelconque des revendications précédentes, **caractérisé en ce que** la composition comprend moins de 10% en poids d'eau, de préférence moins de 5% en poids et mieux encore moins de 1 % en poids, par rapport au poids total de la composition.

10. Procédé selon l'une quelconque des revendications précédentes, **caractérisé en ce que** la composition ne contient pas d'eau.

11. Procédé selon l'une quelconque des revendications précédentes, **caractérisé en ce que** le revêtement externe hydrophobe et/ou oléophobe a une énergie de surface égale ou inférieure à 14 mJ/m², de préférence égale ou inférieure à 13 mJ/m² , mieux égale ou inférieure à 12 mJ/m².

12. Procédé selon l'une quelconque des revendications précédentes, **caractérisé en ce que** la couche temporaire a une énergie de surface supérieure ou égale à 15 mJ/m², de préférence égale ou supérieure à 20 mJ/m², mieux encore égale ou supérieure à 30 mJ/m², et préférentiellement une composante polaire de l'énergie de surface inférieure à 26 mJ/m².

13. Procédé selon l'une quelconque des revendications précédentes, **caractérisé en ce que** la couche temporaire a une épaisseur de 1 à 80 micromètres, de préférence 10 à 60 micromètres.

14. Procédé selon l'une quelconque des revendications précédentes, **caractérisé en ce que** la couche temporaire est un film pelable.

15. Procédé selon l'une quelconque des revendications précédentes, **caractérisé en ce que** l'article d'optique comporte sur ladite surface principale un revêtement de primaire antichoc.

16. Procédé selon l'une quelconque des revendications précédentes, **caractérisé en ce que** l'article d'optique constitue une lentille ophtalmique.

17. Procédé selon l'une quelconque des revendications précédentes, **caractérisé en ce que** le solvant est choisi parmi la N-méthylpyrrolidone, le diméthylacétamide, le chloroforme, le diméthylformamide et leurs mélanges, et éventuellement en combinaison avec un alcanol tel que l'éthanol.

## Patentansprüche

1. Verfahren zur Herstellung von einem optischen Artikel, der auf einer seiner Hauptflächen eine wasser-und/oder ölabweisende äußere Beschichtung aufweist, **dadurch gekennzeichnet, dass** es das Aufbringen einer Schicht mit einer Zusammensetzung aus einem oder mehreren aliphatischen thermoplastischen Polyurethanen mit Polyether- oder Polyesterhauptkette in Lösung in einem organischen Lösungsmittel oder einem Gemisch aus organischen Lösungsmitteln unmittelbar auf die wasser-und/oder ölabweisende äußere Beschichtung des optischen Artikels und das Trocknen der Zusammensetzung umfasst, um eine temporäre getrocknete Schicht zu erhalten, die ein oder mehrere aliphatische thermoplastische Polyurethane mit Polyether- oder Polyesterhauptkette umfasst, vorzugsweise daraus besteht.

2. Verfahren nach Anspruch 1, **dadurch gekennzeichnet, dass** die aliphatischen thermoplastischen Polyurethane Reaktionsprodukte aus einem oder mehreren aliphatischen Diisocyanaten und einem oder mehreren aliphatischen Polyolen sind.

3. Verfahren nach Anspruch 2, **dadurch gekennzeichnet, dass** die aliphatischen Polyole aus Polyolen mit Polyether- oder Polyesterhauptkette ausgewählt werden.

4. Verfahren nach Anspruch 2, **dadurch gekennzeichnet, dass** die aliphatischen Polyole aus elastomeren Polyolen mit Polyetherhauptkette ausgewählt werden.

5. Verfahren nach einem der Ansprüche 2 bis 4, **dadurch gekennzeichnet, dass** das Polyol aus Polyethylenglykolen, Polypropylenglykolen, Polybutylenglykolen und ihren Mischungen, vorzugsweise Mischungen aus Polybutylenglykol(en) und Polyethylenglykol(en) ausgewählt wird, wobei das (oder die) Polybutylenglykol(e) in der Mischung Hauptbestandteil(e) ist bzw. sind.

6. Verfahren nach Anspruch 2 oder 3, **dadurch gekennzeichnet, dass** das Polyol aus Polyolen mit Polyesterhauptkette ausgewählt wird, die eine zweibasige Säure beinhalten, wobei der Ester durch Veresterung mit Ethylenglykol, Propylenglykol, Polyethylenglykol, Polypropylenglykol, Polybutylenglykol oder ihren Mischungen erhalten wird.

7. Verfahren nach einem der Ansprüche 2 bis 6, **dadurch gekennzeichnet, dass** das Diisocyanat ausgewählt wird aus Hexamethylen-1,6-diisocyanat, Isophorondiisocyanat, Ethylendiisocyanat, Dodecan-1,12-diisocyanat, Cyclohexan-1,3-diisocyanat, Dicyclohexylmethan-4,4'-diisocyanat und ihren Mischungen.

8. Verfahren nach einem der vorhergehenden Ansprüche, **dadurch gekennzeichnet, dass** die Zusammensetzung bezogen auf das Gesamtgewicht der Zusammensetzung 5 bis 20%, vorzugsweise 5 bis 15% aliphatisches thermoplastisches Polyurethan umfasst.

9. Verfahren nach einem der vorhergehenden Ansprüche, **dadurch gekennzeichnet, dass** die Zusammensetzung bezogen auf das Gesamtgewicht der Zusammensetzung weniger als 10 Gewichts-% Wasser, vorzugsweise weniger als 5 Gewichts-% und noch besser weniger als 1 Gewichts-% umfasst.

10. Verfahren nach einem der vorhergehenden Ansprüche, **dadurch gekennzeichnet, dass** die Zusammensetzung kein Wasser enthält.

11. Verfahren nach einem der vorhergehenden Ansprüche, **dadurch gekennzeichnet, dass** die wasser- und/oder ölabweisende äußere Beschichtung eine Oberflächenenergie von kleiner gleich 14 mJ/m², vorzugsweise kleiner gleich 13 mJ/m², besser kleiner gleich 12 mJ/m² aufweist.

12. Verfahren nach einem der vorhergehenden Ansprüche, **dadurch gekennzeichnet, dass** die temporäre Schicht eine Oberflächenenergie von größer gleich 15 mJ/m², vorzugsweise größer gleich 20 mJ/m², noch besser größer gleich 30 mJ/m² und bevorzugt einen polaren Anteil der Oberflächenenergie von unter 26 mJ/m² aufweist.

13. Verfahren nach einem der vorhergehenden Ansprüche, **dadurch gekennzeichnet, dass** die temporäre Schicht eine Dicke von 1 bis 80 Mikrometern, vorzugsweise 10 bis 60 Mikrometern aufweist.

14. Verfahren nach einem der vorhergehenden Ansprüche, **dadurch gekennzeichnet, dass** die temporäre Schicht ein abziehbarer Film ist.

15. Verfahren nach einem der vorhergehenden Ansprüche, **dadurch gekennzeichnet, dass** der optische Artikel auf der Hauptfläche eine schlagfeste Grundierungsbeschichtung aufweist.

16. Verfahren nach einem der vorhergehenden Ansprüche, **dadurch gekennzeichnet, dass** der optische Artikel ein Brillenglas ist.

17. Verfahren nach einem der vorhergehenden Ansprüche, **dadurch gekennzeichnet, dass** das Lösungsmittel ausgewählt wird aus N-Methylpyrrolidon, Dimethylacetamid, Chloroform, Dimethylformamid und ihren Mischungen und gegebenenfalls in Verbindung mit einem Alkanol wie Ethanol.

## Claims

1. A method for producing an optical article comprising on one of the main surfaces thereof an external oleophobic and/or hydrophobic coating, **characterized in that** it comprises depositing a layer of a composition comprising one or more aliphatic thermoplastic polyurethane(s) having a polyether or polyester backbone as a solution in an organic solvent or a combination of organic solvents directly onto the external oleophobic and/or hydrophobic coating of the optical article and drying the composition for obtaining a dried temporary layer comprising, preferably consisting in, one or more aliphatic thermoplastic polyurethane(s) having a polyether or polyester backbone.

2. A method according to claim 1, wherein the aliphatic thermoplastic polyurethanes are the products of the reaction of one or more aliphatic diisocyanate(s) with one or more aliphatic polyol(s).

3. A method according to claim 2, wherein the aliphatic polyols are chosen from polyols having a polyether or polyester backbone.

4. A method according to claim 2, wherein said aliphatic polyols are chosen from polyols having a polyether backbone and being elastomers.

5. A method according to any one of claims 2 to 4, wherein the polyol is selected from polyethylene glycols, polypropylene glycols, polybutylene glycols and mixtures thereof, preferably the mixtures of polybutylene glycol(s) and polyethylene glycol(s), the polybutylene glycol(s) being the predominant component(s) in the mixture.

6. A method according to claim 2 or 3, wherein the polyol is chosen from polyols having a polyester backbone comprising a dibasic acid, the ester being obtained by esterifying with ethylene glycol, propylene glycol, polyethylene glycol, polypropylene glycol, polybutylene glycol or mixtures thereof.

7. A method according to any one of claims 2 to 6, wherein the diisocyanate is selected from hexamethylene-1,6-diisocyanate, isophorone diisocyanate, ethylene diisocyanate, dodecane-1,12-diisocyanate, cyclohexane-1,3-diisocyanate, bis-(4-isocyanato-cyclohexyl)-methane and mixtures thereof.

8. A method according to any one of the preceding claims, wherein the composition comprises from 5 to 20%, preferably from 5 to 15% of aliphatic thermoplastic polyurethane as related to the composition total weight.

9. A method according to any one of the preceding claims, wherein the composition comprises less than 10% by weight of water, preferably less than 5% by weight and even more preferably less than 1% by weight, as related to the composition total weight.

10. A method according to any one of the preceding claims, wherein the composition is devoid of water.

11. A method according to any one of the preceding claims, wherein the external oleophobic and/or hydrophobic coating has a surface energy lower than or equal to 14 mJ/m², preferably lower than or equal to 13 mJ/m², more preferably lower than or equal to 12 mJ/m².

12. A method according to any one of the preceding claims, wherein the temporary layer has a surface energy higher than or equal to 15 mJ/m², preferably higher than or equal to 20 mJ/m², even more preferably higher than or equal to 30 mJ/m², and preferably a surface energy polar component lower than 26 mJ/m².

13. A method according to any one of the preceding claims, wherein the temporary layer has a thickness ranging from 1 to 80 micrometers, preferably from 10 to 60 micrometers.

14. A method according to any one of the preceding claims, wherein the temporary layer is a strippable film.

15. A method according to any one of the preceding claims, wherein the optical article bears on said main surface an impact-resistant primer coating.

16. A method according to any one of the preceding claims, which is an ophthalmic lens.

17. A method according to any one of the preceding claims, wherein the solvent is selected from N-methylpyrrolidone, dimethyl acetamide, chloroform, dimethyl formamide and mixtures thereof, and optionally in combination with an alkanol such as ethanol.
